# EUROPEAN PATENT SPECIFICATION

(11) **EP 2 072 349 B1**
(45) Date of publication and mention of the grant of the patent: **06.03.2013**
(21) Application number: 08166896.4
(22) Date of filing: 17.10.2008
(51) Int. Cl.: B60R 21/36

(54) **Airbag device**
Airbagvorrichtung
Dispositif d'airbag

(30) Priority: 18.12.2007 JP 2007325658; 19.09.2008 JP 2008240263
(43) Date of publication of application: 24.06.2009
(73) Proprietor: TAKATA CORPORATION, Minato-ku, Tokyo 106-8510 (JP)
(72) Inventor: Nakamura, Atsushi, Tokyo 106-8510 (JP)
(74) Representative: Vossius & Partner

(56) References cited:
- WO-A-02/079009
- JP-A- 7 108 903
- JP-A- 2006 076 448

## Description

The present invention belongs to a technical field of an airbag device for lessening an impact applied to a collision object and a vehicle by being inflated by gas from an inflator or the like and extending into the outside of the vehicle in the event of an emergency such as a collision of the vehicle with the collision object or the like.

Hitherto, there has been a device that allows an airbag to extend at a pillar portion of a vehicle in the event of a collision between a vehicle and a pedestrian or the like, and lessens the impact arising when the pedestrian or the like comes again into collision with the vehicle.

There is disclosed an airbag device, for example, the impact lessening ability of which is improved in a manner such that, when an airbag bag body thereof is inflated at the upper front of a pillar portion, a cover is allowed to extend to the outside in a vehicle width direction, and the airbag bag body is inflated toward the inside in the vehicle width direction, while being held at the position where it is inflated (refer to JP-A-2002-283939 (Patent Document 1)).

As an attachment device for attaching a molding between a vehicle body and a window shield, there is also disclosed a technique by which a molding is fixed to a vehicle body using a rivet and held by a clip (refer to JP-A-2000-142102 (Patent Document 2)).

However, in the airbag device described in Patent Document 1, a bolt and a nut are used for fixing an airbag device to a front pillar, which requires a large space. Moreover, for attachment and detachment, a vehicle body is required to have a particular configuration of being provided with a working hole and the like.

And, in the molding attachment device described in Patent Document 2, since a molding is fixed using a rivet, a vehicle body is required to be provided with a fixing hole, and also since the molding is held by a clip, it is difficult to provide an accommodation space inside the molding. Such an airbag device is also known from WO 02/079009.

The present invention addresses the above problems with the object of providing an airbag device that can be accommodated in a small space and receives a pedestrian or the like properly and softly by being inflated in a stable state.

In order to solve the problems described above, the invention of Claim 1 provides an airbag device in which an airbag, a gas generator blowing gas into the airbag, a detection means for detecting a collision, a control means for causing the gas generator to be activated in accordance with a signal from the detection means, and a cover for accommodating the airbag, the airbag being disposed along a front pillar and being to be inflated at the outside of a vehicle are included, wherein it is characterized to provide a surface fastening means for holding the cover to the front pillar via a first surface fastener being attached to a second surface fastener, the first surface fastener being stuck to a second face of the front pillar facing a window shield, and a second surface fastener being stuck to a surface fastening portion of the cover facing the front pillar.

The invention of Claim 2 is **characterized in that** the surface fastening means is attachable and detachable.

The airbag device according to the present invention configured as described above enables the cover to be held in a small space to the front pillar, since it is provided with an airbag, a gas generator blowing gas into the airbag, a detection means for detecting a collision, a control means for causing the gas generator to be activated in accordance with a signal from the detection means, and a cover for accommodating the airbag, the airbag being disposed along a front pillar and being to be inflated at the outside of a vehicle, wherein a surface fastening means for holding the cover to the front pillar is included.

In addition, since the surface fastening means is attachable and detachable, when required to be removed due to repair or other reason, the cover can be easily detached and attached without being deformed.

An embodiment of the present invention will now be described below with reference to the attached drawings.
Fig. 1 is a view showing an embodiment of an airbag according to the present invention;
Fig. 2 is a perspective view of a vehicle to which an airbag device of this embodiment is mounted;
Fig. 3 is a perspective view of the vicinity of a front pillar of the vehicle of this embodiment;
Fig. 4 is a cross-section view taken from line a-a of Fig. 3;
Fig. 5 is a view illustrating a cover 11;
Fig. 6 are cross-section views taken from each of line b-b and line c-c of Fig. 5;
Fig. 7 is a view showing a bag inflating direction restricting member 22;
Fig. 8 is a partial view of the front pillar seen from the side of a window shield;
Fig. 9 is a perspective view of the vicinity of the front pillar, in which a cover, the airbag and a fender are omitted;
Fig. 10 is a cross-section view taken from line d-d of Fig. 9;
Fig. 11 are views showing the actuation of the airbag device of this embodiment;
Fig. 12 is a cross-section view of the airbag device 10 when activated;
Fig. 13 is a perspective view of the vicinity of the front pillar in a completion stage of inflation;
Fig. 14 is a cross-section view taken from line e-e of Fig. 13;
Fig. 15 is a cross-section view taken from line f-f of Fig. 13; and
Fig. 16 is a perspective view of the vicinity of the front pillar in a completion stage of inflation, in which the airbag is omitted.

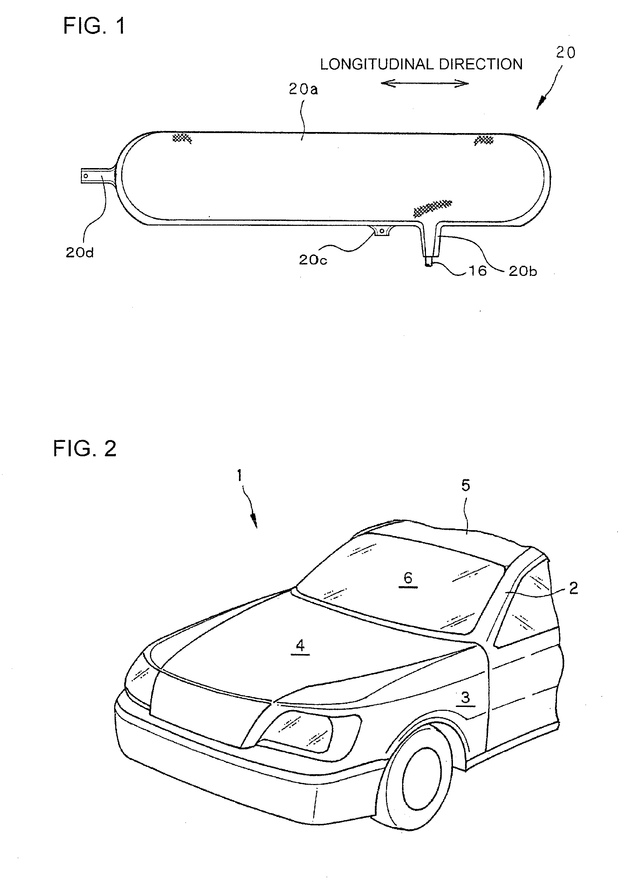

Fig. 1 shows an airbag 20 of this embodiment. The airbag 20 of this embodiment is formed by folding back a sheet of base fabric and sewing it, and is constituted of a main inflated portion 20a, a pipe connecting portion 20b, a first securing portion 20c and a second securing portion 20d. The main inflated portion 20a has a substantially oval shape and serves as a portion for lessening an impact applied to a collision object such as a pedestrian or the like when inflated. The pipe connecting portion 20b projects in a direction perpendicular to the longitudinal direction of the main inflated portion 20a and serves as a portion where a pipe 16 is inserted and crimped. The first securing portion 20c projects in the vicinity of the pipe connecting portion 20b in a direction perpendicular to the longitudinal direction of the main inflated portion 20a and serves as a portion for securing the airbag 20 to a vehicle body. The second securing portion 20d is provided on one side of the main inflated portion 20a of the airbag 20 and serves as a portion for securing the airbag 20 to the vehicle body.

Next, a state in which an airbag device 10 including the airbag 20 is mounted to a vehicle 1 will be described.

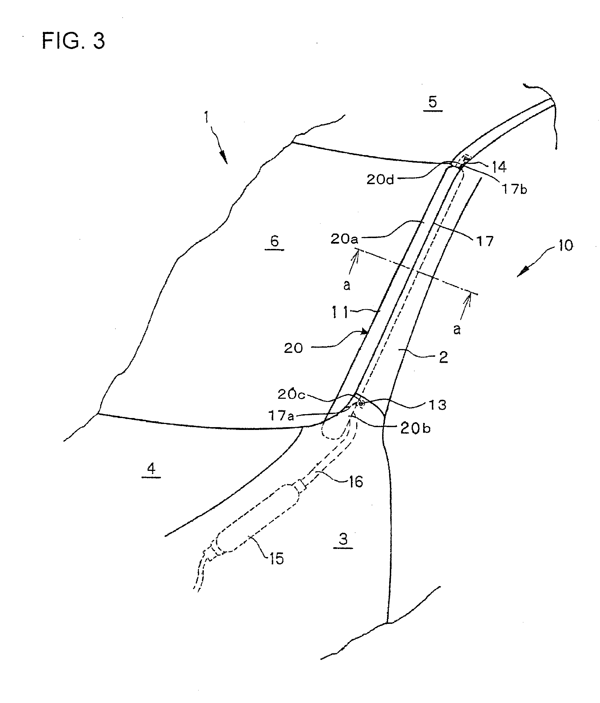

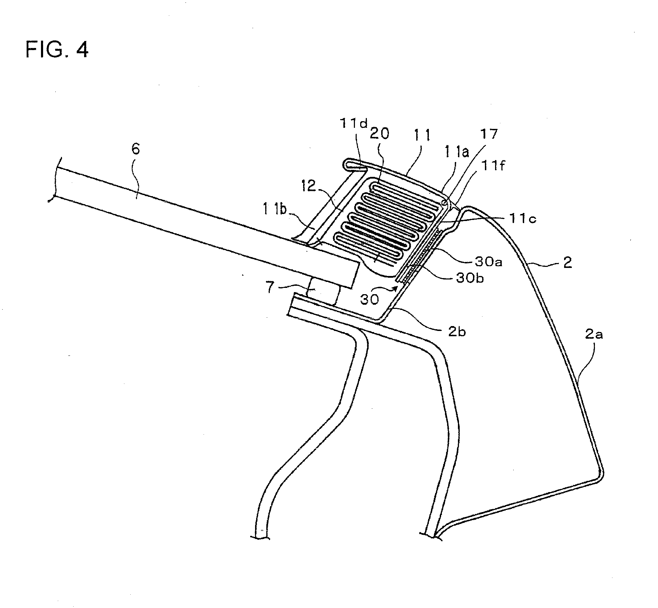

Fig. 2 is a perspective view of a vehicle to which the airbag device of this embodiment is mounted, Fig. 3 is a perspective view of the vicinity of a front pillar of the vehicle of this embodiment, and Fig. 4 is a cross-section view taken from line a-a of Fig. 3.

In the drawings, reference numeral 1 denotes a vehicle, 2 denotes a front pillar, 3 denotes a fender, 4 denotes a hood, 5 denotes a roof, 6 denotes a window shield, 7 denotes a seal, 10 denotes an airbag device, 11 denotes a cover, 12 denotes a bag case, 13, 14 each denote an anchor, 15 denotes a gas generator, 16 denotes a pipe, 20 denotes an airbag, and 30 denotes a surface fastening means.

The vehicle 1 includes the front pillar 2 connecting an unshown member or an engine room frame and the roof 5; it also includes the window shield 6, which is enclosed with the hood, the roof 5 and the front pillar 2, and is mounted through the intermediary of the seal 7.

The airbag device 10 is accommodated in the space adjacent to the front pillar 2 on the side of the window shield 6 and the fender 3. The front pillar 2 has a first face 2a facing the outside of the vehicle 1 and a second face 2b facing the window shield side, and on the side of second face 2b the airbag 20 is accommodated in the cover 11 in a state of being folded and housed in the bag case 12.

The airbag 20 is secured to the vehicle body in a manner such that its first securing portion 20c is secured to the anchor 13 and its second securing portion 20d is secured to the anchor 14.

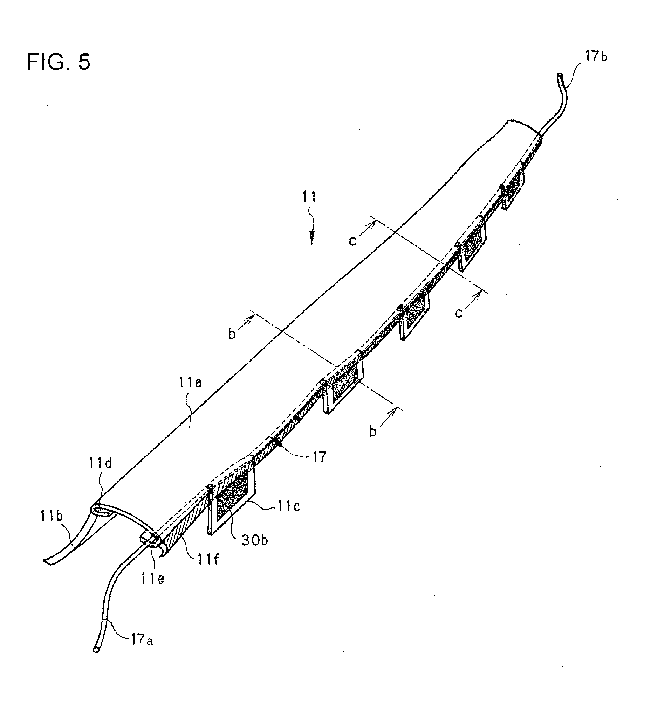

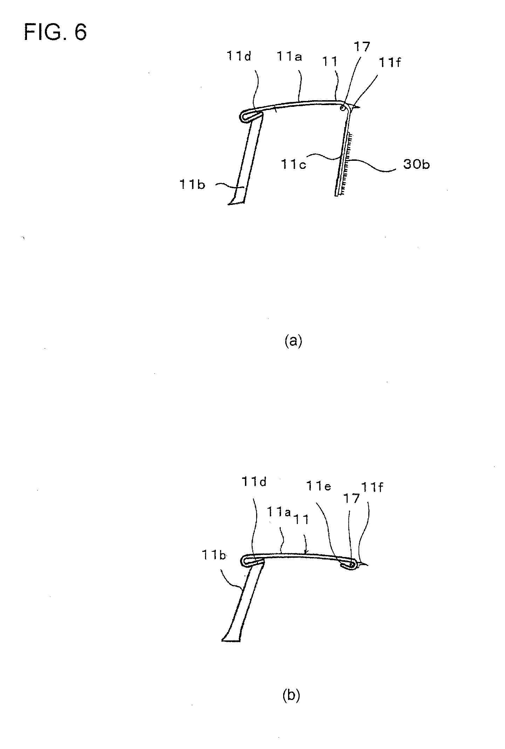

Fig. 5 is a perspective view showing the cover, and Figs. 6 are cross-section views taken from each of line b-b and line c-c of Fig. 5. The cover 11 is constituted of a long-length member and includes an upper cover 11a, a side cover 11b on the side of the window shield 6, surface fastening portions 11c on the side of the front pillar 2, a first folded back portion 11d on the side of the window shield 6, second folded back portions 11e on the side of the front pillar 2, and a seal 11f.

The surface fastening portions 11c and the second folded back portions 11e are disposed alternately, and as the result, the cover 11 has portions each of which has a substantially angular U-shaped cross-section and includes the upper cover 11a, the first side cover 11b on the side of the window shield 6, and the surface fastening portion 11c as shown in Fig. 6(a), and portions each of which has a substantially L-shaped cross-section and includes the upper cover 11a and the first side cover 11b on the side of the window shield 6 as shown in Fig. 6(b).

With this configuration, as shown in Fig. 3, the cover 11 is disposed so as to conceal the airbag 20 folded on the side of the second face 2b of the front pillar 2. It is noted that the folded airbag 20 may be not housed in the bag case 12 but directly accommodated in the cover 11.

The cover 11 is provided with a cover-scattering preventing member 17 such as a strap or the like, which is inserted through the second folded back portions 11e of the upper cover 11a and is crimped. One end 17a of the cover-scattering preventing member 17 is secured to the anchor 13, the basal portion of the front pillar 2, the member, or the other portion on the vehicle body side, and the other end 17b is secured to the anchor 14.

The front pillar 2 and the cover 11 are fastened to each other using the surface fasteners 30. The surface fasteners 30 are constituted of first surface fasteners 30a stuck to the second face 2b of the front pillar 2 and second surface fasteners 30b stuck to the surface fastening portions 11c of the cover 11, and the cover 11 is held to the front pillar 2 by that the first surface fasteners 30a and the second surface fasteners 30b are fastened to each other.

Like this, it becomes possible to hold the cover 11 in a small space to the front pillar 2 by surface fastening the front pillar 2 and the cover 11 to each other using the surface fasteners 30. Moreover, when required to be removed due to repair or other reason, the cover 11 can be easily detached and attached without being deformed.

It is noted that, although the surface fasteners 30 are adapted as a surface fastening means in this embodiment, a configuration may be employed in which the cover is held by being surface bonded with a double-faced tape, adhesive or the like adapted as a surface fastening means.

There is attached a seal 11f in the vicinity of an intersection point of the upper cover 11a and each of the surface fastening portions 11c, and in the vicinity of each of the second, folded back portions 11e, the seal 11f covering the gap between the front pillar 2 and the cover 11, and serving for improving design characteristics and waterproof property.

In the underside of the fender 3 or the hood 4, there are accommodated the gas generator 15 generating gas for inflating the airbag 20, the pipe 16 for supplying the gas generated by the gas generator 15 to the airbag 20, and the like.

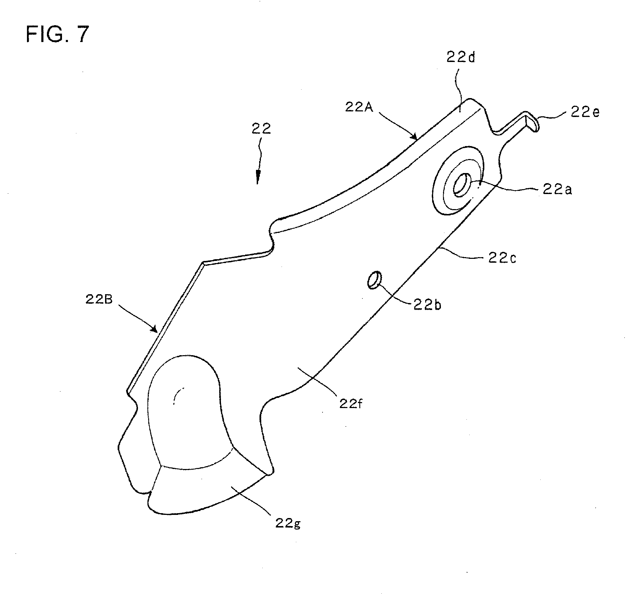

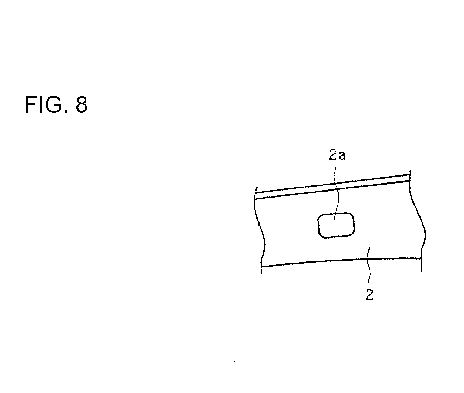

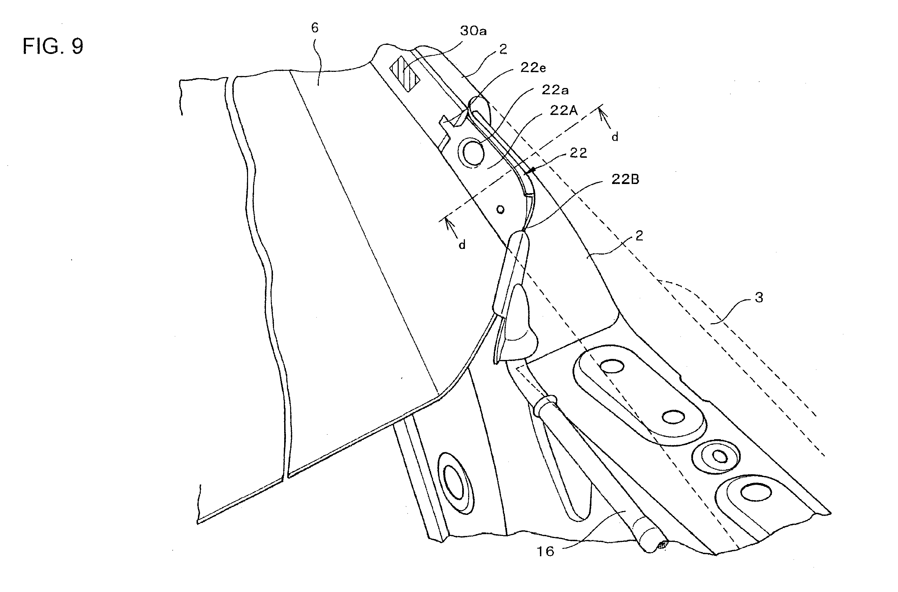

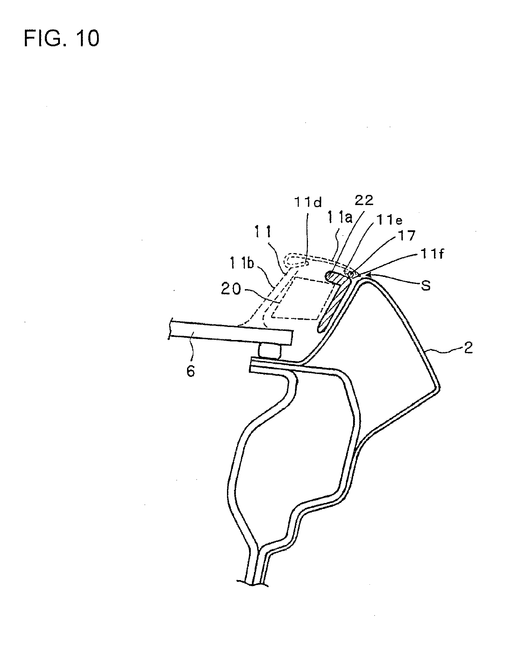

Fig. 7 is a view showing a bag inflating direction restricting member 22, Fig. 8 is a partial view of the front pillar 2 seen from the side of the window shield 6, Fig. 9 is a perspective view of the vicinity of the front pillar 2, in which the cover 11, the airbag 20 and the fender 3 are omitted, and Fig. 10 is a cross-section view taken from line d-d of Fig. 9.

As shown in Fig. 7, the bag inflating direction restricting member 22 is constituted of a fixing portion 22A formed of a plate-like member so as to have a substantially L-shaped cross-section and a concealing portion 22B concealing the gap between the fender 3 and the window shield 6. The fixing portion 22A includes a vehicle body fixing portion 22a fixed to the vehicle 1 using a screw or the like, a bag fixing portion 22b for fixing the airbag 20, a side wall guide portion 22c standing up substantially perpendicular with respect to the window shield 6, and an extension portion 22d extending substantially parallel with the upper cover 11a from an end portion of the side wall guide portion 22c. Additionally, in the side wall guide portion 22c, there is provided a hooking portion 22e hooked to a securing hole 2a shown in Fig. 8, which is provided in the front pillar 2. The concealing portion 22B includes a connecting portion 22f connected to the fixing portion 22A, the connecting portion 22f being a curved plane smoothly curved along the front pillar 2, and a curvature portion 22g which is provided in the end portion opposite with respect to the fixing portion 22A and through which the pipe 16 passes.

Fig. 9 and Fig. 10 show the state that the bag inflating direction restricting member 22 is mounted to the vehicle 1. The vehicle body fixing portion 22a of the bag inflating direction restricting member 22 is fixed to the vehicle 1 using a screw or the like, as well as the hooking portion 22e of the bag inflating direction restricting member 22 shown in Fig. 7 is hooked to a securing hole 2a of the front pillar 2 shown in Fig. 8. At this time, the fixing portion 22A is strongly attached so as to be pressed in along the front pillar 2. The concealing portion 22B conceals the gap between the fender 3 and the window shield 6, and serves to prevent the airbag 20 from intruding into the underside of the fender 3, while serving to guide the pipe 16 at the curvature portion 22g.

It is noted that a portion of the surface fastening portions 11c of the cover 11 adjacent to the bag inflating direction restricting member 22 is formed to be shorter than a portion fastened to the front pillar 2, and thereby the airbag is not interfered by the bag inflating direction restricting member 22 when being inflated.

Like this, after the bag inflating direction restricting member 22 is mounted to the vehicle 1, the airbag device 10 having been shown in Fig. 3 and Fig. 4 is fixed, and then enclosed with the cover 11 as shown in Fig. 10.

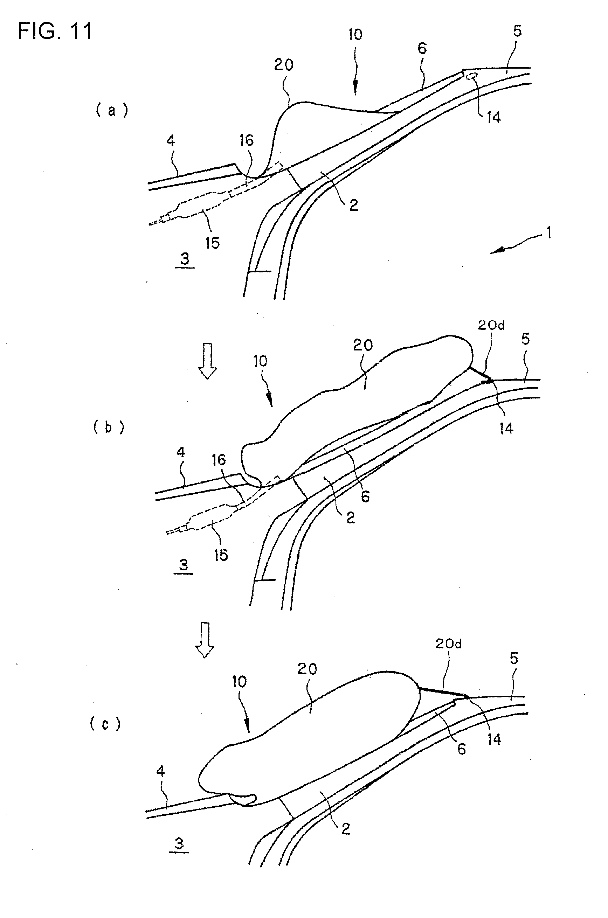

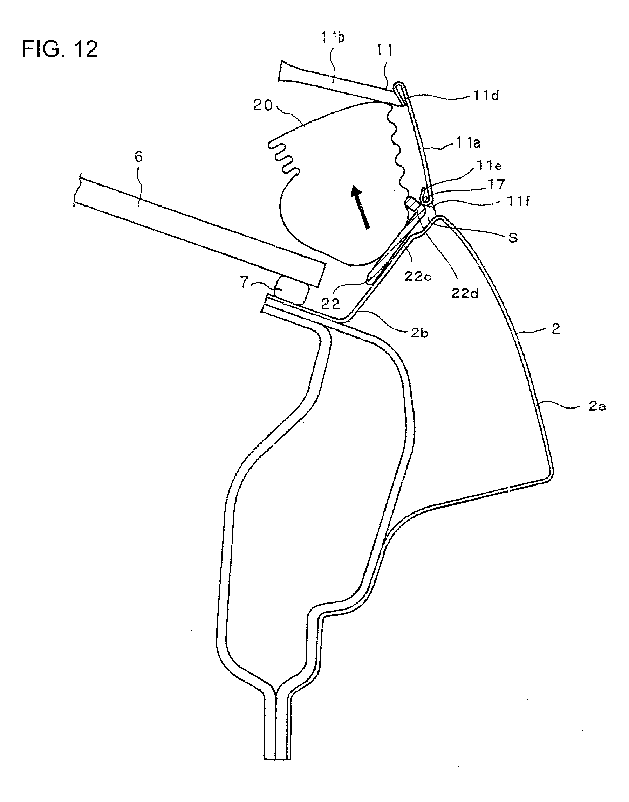

Next, the actuation of the airbag device 10 of this embodiment will be described. Figs. 11 are views showing the actuation of the airbag device 10 of this embodiment, and Fig. 12 is a cross-section view of the airbag device 10 when activated.

The airbag device 10 in a state of accommodation shown in Fig. 3 is activated by a control means or the like in accordance with a detected signal in the case when an impact arising in a vehicle 1 is detected by an unshown detection means or the like or when prediction of an occurrence is detected by a detection means or the like, in the event of collision of the vehicle 1 with an unshown collision object.

Fig. 11(a) shows an early stage of inflation in which the airbag device 10 is just activated and the airbag 20 starts to be inflated as gas flows thereinto via the pipe 16 from the gas generator 15 accommodated in the fender 3. In the early stage of inflation, the airbag 20 starts to be inflated from the side of the fender 3, and the cover 11 shown in Fig. 3 to Fig. 6 is opened due to inflation pressure.

At this time, as shown in Fig. 12, the inflation direction of the airbag 20 is restricted to the direction toward the vehicle center due to the side wall guide portion 22c and also the extension portion 22d of the bag inflating direction restricting member 22. As the result, a clearance S between the cover 11 and the front pillar 2 is concealed and the airbag does not project from the clearance S, which brings about a stable activation.

Fig. 11(b) shows a medium stage of inflation in which the airbag 20 is being inflated as the gas flows thereinto via the pipe 16 from the gas generator 15. In the medium stage of inflation, the whole of the airbag 20 is fully exposed to the outside from a state of being folded.

Fig. 11(c) shows a completion stage of inflation in which the inflation of the airbag 20 is completed. In the completion stage of inflation, the airbag 20 is fully inflated. The state of the airbag 20 in the completion stage of inflation will be described below.

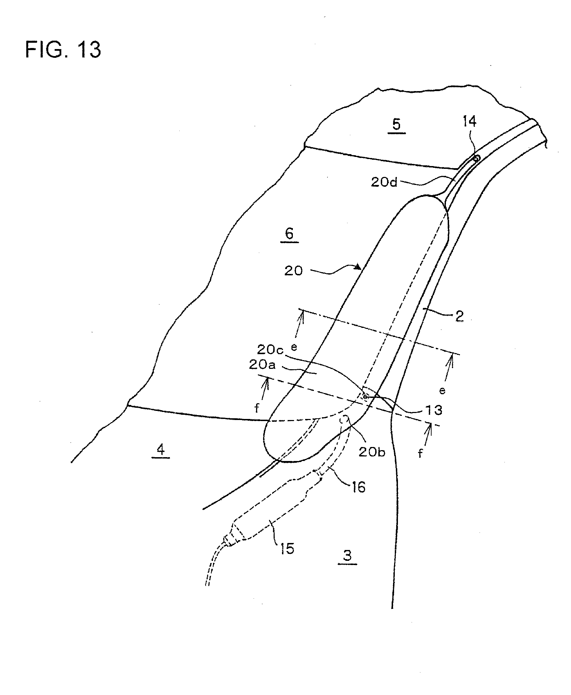

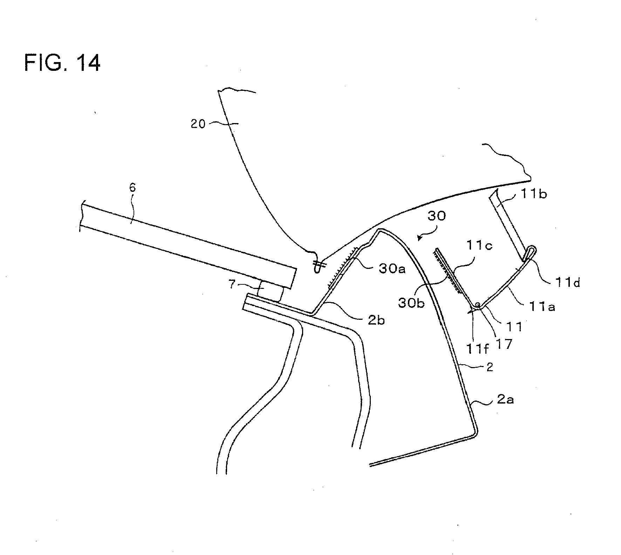

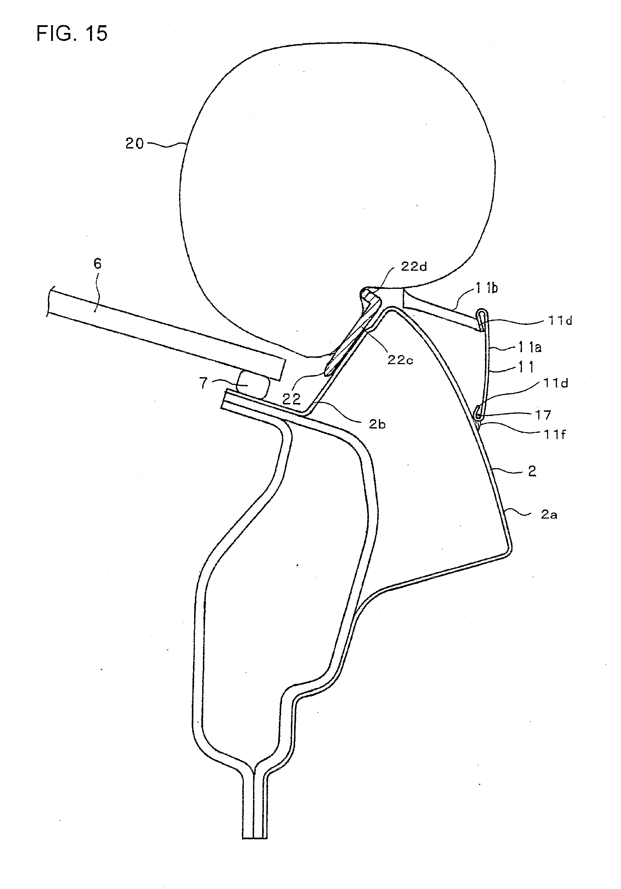

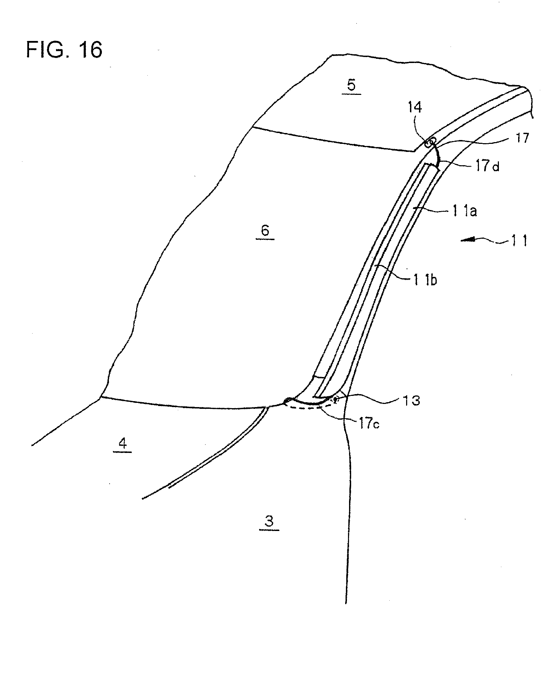

Fig. 13 is a perspective view of the vicinity of the front pillar 2 in a completion stage of inflation, Fig. 14 is a cross-section view taken from line e-e of Fig. 13, Fig. 15 is a cross-section view taken from line f-f of Fig. 13, and Fig. 16 is a perspective view of the vicinity of the front pillar in a completion stage of inflation, in which the airbag is omitted.

As shown in Fig. 13, in a completion stage of inflation, the airbag 20 extends in a direction along the front pillar 2 in a space in front of the front pillar 2 and above both portions of the fender 3 and the hood 4.

As shown in Fig. 14, in the completion stage of inflation, the cover 11 having been fastened to the front pillar 2 using the surface fastening means 30 is separated from the front pillar 2 since both the first surface fasteners 30a having been stuck to the second face 2b of the front pillar 2 and the second surface fasteners 30b having been stuck to the second side covers 11c of the cover 11 are separated from each other due to the inflation pressure.

Moreover, as shown in Fig. 15, in the completion stage of inflation, the direction in which the airbag is inflated is restricted so as to direct toward the front of the front pillar 2 and the center of the vehicle, where a collision object such as a pedestrian or the like comes into collision with a high possibility, by the side wall guide portion 22c and the extension portion 22d of the bag inflating direction restricting member 22.

At this time, since the cover 11 has been secured to a vehicle body side by the cover-scattering preventing member 17 via the anchors 13, 14 as shown in Fig. 16, it does not scatter from the vehicle 1. Incidentally, the cover-scattering preventing member 17 may be divided into a second cover-scattering preventing member 17c connecting the anchor 13 and the cover 11, and a first cover-scattering preventing member 17d connecting the anchor 14 and the cover 11.

Like this, since the cover 11 becomes separated from the vehicle 1 in a state of being connected thereto via the cover-scattering preventing member 17 when the airbag 20 is inflated, the cover is hardly subjected to a load and is therefore prevented from being cracked and scattered.

It is noted that, although the cover-scattering preventing member 17 is secured to the anchors 13, 14 for securing the airbag 20 in this embodiment, it may be configured to be secured to the vehicle body via the other member.

Likewise, the bag inflating direction restricting member 22 is not limited to the configuration shown in Fig. 7, but may be modified in various manners.

Furthermore, although the gas generator 15 is constructed to be accommodated in the fender 3 in this embodiment, it may be constructed to be accommodated on the side of the roof 5. In that case, the anchor 13 and the anchor 14 are desired to be located in opposite locations; the anchor 13 may be disposed on the side of the roof 5 and the anchor 14 may be disposed on the side of the fender 3.

The airbag device according to the present invention configured as described above enables the cover 11 to be held in a small space to the front pillar 2, since the surface fasteners 30 for holding the cover 11 to the front pillar 2 are provided.

In addition, since the surface fasteners 30 are attachable and detachable, when required to be removed due to repair or other reason, the cover 11 can be easily detached and attached without being deformed.

An airbag device according to the present invention enables a cover to be held in a small space to a front pillar. Moreover, since a surface fastening means is attachable and detachable, when required to be removed due to repair or other reason, the cover can be easily detached and attached without being deformed.

## Claims

1. An airbag device, comprising:
an airbag (20) ;
a gas generator (15) blowing gas into the airbag;
a detection means for detecting a collision;
a control means for causing the gas generator (15) to be activated in accordance with a signal from the detection means; and
a cover (11) for accommodating the airbag, which is disposed along a front pillar (2) and to be inflated at the outside of a vehicle, **characterized in that**
a surface fastening means (30,30a,30b) holds the cover (11) to the front pillar (2) via a first surface fastener (30a) being attached to a second surface fastener (30b),
the first surface fastener (30a) being stuck to a second face (2b) of the front pillar (2) facing a window shield (6), and
the second surface fastener (30b) being stuck to a surface fastening portion (11c) of the cover (11) facing the front pillar (2).

2. The airbag device according to Claim 1, wherein the surface fastening means (30; 30a, 30b) is attachable and detachable.

## Patentansprüche

1. Airbagvorrichtung mit:
einem Airbag (20);
einem Gasgenerator (15) zum Einblasen von Gas in den Airbag;
einer Erkennungseinrichtung zum Erkennen einer Kollision;
einer Steuereinrichtung zum Aktivieren des Gasgenerators (15) entsprechend einem Signal von der Erkennungseinrichtung; und
einer Abdeckung (11) zum Unterbringen des Airbags, der entlang einer vorderen Säule (2) und zum Aufblasen an der Außenseite eines Fahrzeugs angeordnet ist, **dadurch gekennzeichnet dass**
ein Oberflächenbefestigungsmittel (30, 30a, 30b) die Abdeckung (11) über ein erstes Oberflächenbefestigungselement (30a), das an einem zweiten Oberflächenbefestigungselement (30b) angebracht ist, an der vorderen Säule (2) hält, wobei
das erste Oberflächenbefestigungselement (30a) an einer der Frontscheibe (6) zugewandten zweiten Fläche (2b) der vorderen Säule (2) befestigt ist, und
das zweite Oberflächenbefestigungselement (30b) an einem der vorderen Säule (2) zugewandten Oberflächenbefestigungsabschnitt (11c) der Abdeckung (11) befestigt ist.

2. Airbagvorrichtung nach Anspruch 1, wobei das Oberflächenbefestigungsmittel (30, 30a, 30b) anbringbar und abnehmbar ist.

## Revendications

1. Dispositif d'airbag, comprenant :
un airbag (20) ;
un générateur de gaz (15) soufflant du gaz dans l'airbag ;
un moyen de détection destiné à détecter une collision ;
un moyen de commande destiné à déclencher l'activation du générateur de gaz (15) en fonction d'un signal du moyen de détection ; et
une gaine (11) destinée à maintenir l'airbag, lequel est disposé le long d'un montant avant (2) et doit être gonflé à l'extérieur d'un véhicule, **caractérisé**
**en ce qu'**un moyen de fixation de surface (30, 30a, 30b) maintient la gaine (11) contre le montant avant (2) au moyen d'une première attache de surface (30a) fixée à une deuxième attache de surface (30b), la première attache de surface (30a) étant appliquée contre un deuxième côté (2b) du montant avant (2), opposé à un pare-brise (6),
la deuxième attache de surface (30b) étant appliquée contre une partie de fixation de surface (11c) de la gaine (11) opposée au montant avant (2).

2. Dispositif d'airbag selon la revendication 1, où le moyen de fixation de surface (30, 30a, 30b) est montable et démontable.
